# EUROPEAN PATENT APPLICATION

(11) **EP 2 187 584 A1**
(43) Date of publication of application: **19.05.2010**
(21) Application number: 08800836.2
(22) Date of filing: 11.09.2008
(51) Int. Cl.: H04L 12/58

(54) **A MESSAGE ASSOCIATION METHOD, USER TERMINAL AND SERVER**

(30) Priority: 17.09.2007 CN 200710046210
(71) Applicant: Huawei Technologies Co., Ltd., Longgang District, Shenzhen Guangdong 518129 (CN)
(72) Inventor: XIE, Lei, Guangdong 518129 (CN); WU, Yajuan, Guangdong 518129 (CN)
(74) Representative: Pfenning, Meinig & Partner GbR
(86) International application number: PCT/CN2008/072325
(87) International publication number: WO 2009/036689

(57) **Abstract**

A method for associating messages a disclosed. The method includes receiving, by a server, a first message sent by a first user terminal, where the first message contains an association ID corresponding to the first message and the association ID is generated by the first user terminal; sending, by the server, the first message containing the association ID to a second user terminal; receiving, by the server, the second message containing the association ID, which is sent by the first user terminal or the second user terminal; storing, by the server, the second message and the association ID in an associating manner. A user terminal and a server thereof are also provided.

## Description

### FIELD OF THE INVENTION

The present invention relates to the communications field, and more specifically to a method for associating messages and a user terminal and a server thereof.

### BACKGROUND

With the development of the telecommunication service, more and more messaging services, for example, the Short Message Service (SMS) which has now gained a wide popularity, Multimedia Message Service (MMS), and Instance Message (IM), emerge. In addition, such service may further include a cluster service like the Push to talk Over Cellular (POC) which supports voice services and multimedia messages, a multimedia conferencing service, as well as an Email service which is used frequently on a daily basis. In practical application, based on different types of networks carrying messaging services, messaging services may also be categorized into a variety of specific applications such as mobile network based messaging services, Internet based messaging services, and fixed access network based messaging services. It can be seen that the messaging service has become a key service in terms of the current telecommunication network and the Internet. Moreover, the messaging service may become one of the indispensable key services in the further next generation network.

With the convergence of the mobile network and the fixed network, the boundary between the IP-based network and the traditional telecommunication network is getting more and more blurred. Different types of messaging services start to be interrelated and interact with each other and exhibit many common characteristics, such as supporting multimedia, being based on presence information, having a unique address book, and having some common sharing functions and capabilities, such as XML Document Management Service. The combination of the above characteristics requires a standalone converged messaging platform so as to absorb different techniques and support different messaging experience for the users.

The IP-based converged message, i.e., Converged IP messaging, is a brand new messaging service framework advocated by OMA for providing a user with the experience of converged services such as instance messages, off-line messages, multimedia session, audio service of half duplex/full duplex and video conference. The converged messaging service (CPM) allows a user to use communication services with different technical features in a uniform manner, overcoming the "Silos" between the non-CPM messaging services due to technical difference. Accordingly, the user service is provided with unified service experience and future messaging functions are provided with a generic and reusable service capability so that these services may support applications which are based on IP implementation and require messaging function. To maximize the interoperability among all kinds of users, for instance, to support future users of IP-based messaging service and existing users of traditional non-CPM messaging service, the CPM requires interoperability between IP-based messaging service and traditional messaging service. Furthermore, CPM also enables the users to enjoy the same service experience no matter which IP network service domain the users locates in. CPM provides a converged and unified implementation technique for different messaging services and employs a generic charging criteria.

CPM requires associating interaction information (including messages, sessions) in a converged messaging session upon the given demands. Moreover, such association information is stored in a network storage. A participant in the converged messaging session including the participant who joins the session afterwards may be able to find the interaction information of the related converged messaging session according to such association information. According to the CPM requirements, there is a need for a mechanism for managing and maintaining the association of information in the converged messaging session. Moreover, such association information should be saved when the message and the session are being saved so that an authorized user may be allowed to view all the interaction information in the converged messaging session.

However, the existing technique can only realize the association among the interaction information in a messaging system, or the association among the interaction information in a session. Currently, no approach is proposed to associate the message interacted in the session with the interaction information outside the session in the messaging system. More complicated scenes are proposed in the converged IP messaging service. A user may initially conduct interaction with standalone messages and then sets up a session to conduct interaction when needed. After the session is terminated, the user still conducts interaction with standalone messages. Consequently, demanding requirements are set for the association of information. It has been always a headache for the current techniques as to how to associate the messages in the session with the information interacted outside the session using standalone messages.

### SUMMARY

More complicated scenes might exist in the converged IP messaging service. That is, a user may initially conduct interaction with standalone messages and then sets up a session to conduct interaction when needed. After the session is terminated, the user still conducts interaction with standalone messages. In this case, there are higher requirements for the association of information. Current techniques cannot solve the problem that how to associate the messages in the session with the information interacted outside the session using standalone messages.

An aspect of the present invention is intended to solve the problem that how to associate the messages interacted in the session with the messages interacted outside the session using standalone messages. To solve the problem, technical solutions are presented below according to the present invention.

A server receives a first message sent by a first user terminal, where the first message contains an association ID corresponding to the first message and the association ID is generated by the first user terminal. The server sends the first message containing the association ID to a second user terminal. The server receives a second message containing the association ID, which is sent by the first user terminal or the second user terminal. The server stores the second message and the association ID in an associating manner.

A method for associating messages according to an aspect of the present invention includes receiving, by a server, a first message sent by a first user terminal; sending, by the server, the first message contains an association ID to a second user terminal and storing the first message and the association ID in an associating manner; receiving, by the server, a second message sent by the first user terminal or the second user terminal, where the second message includes information indicating the association between the second message and the first message; querying, by the server, stored association IDs for an association ID corresponding to the information indicating the association between the second message and the first message; storing, by the server, the second message and the queried association ID in an associating manner if the association ID is found.

A user terminal according to an aspect of the present invention includes a transceiving unit, configured to receive or send a first message or a second message; an ID generating unit, configured to generate an association ID corresponding to the first message and send the association ID to a message generating unit; the message generating unit, configured to generate a first message or a second message according to the association ID.

A server according to an aspect of the present invention includes a receiving unit, configured to receive a standalone message or a session message containing an association ID; a storage unit, configured to store, in an associating manner, the standalone message or the session message received from the receiving unit and the corresponding association ID; a sending unit, configured to send the standalone message or the session message received from the receiving unit and the corresponding association ID to a user terminal; and a processing unit, configured to obtain the corresponding association ID according to the standalone message or the session message received from the receiving unit, and configured to store, in an associating manner, the standalone message or session message received from the receiving unit and the corresponding association ID via the storage unit.

Overall, according to the present invention, because standalone messages or session messages for each subject are assigned with association IDs, association may be performed based on the association IDs when conversion is conducted between the standalone messages and the session messages for the same subject or when the session messages run simultaneously with the standalone messages. Accordingly, a user may interact messages in a more convenient manner and may learn the content of the current session in time in a message interaction process.

### BRIEF DESCRIPTION OF THE DRAWINGS

FIG. 1 illustrates a flowchart of a method for associating messages according to a first embodiment of the present invention;
FIG. 2 illustrates a flowchart of a method for associating messages according to a second embodiment of the present invention;
FIG. 3 illustrates a flowchart of a method for associating messages according to a third embodiment of the present invention;
FIG. 4 illustrates a flowchart of a method for associating messages according to a fourth embodiment of the present invention;
FIG. 5 illustrates a flowchart of a method for associating messages according to a fifth embodiment of the present invention;
FIG. 6 illustrates a signaling flowchart of a method for associating messages according to an embodiment of the present invention;
FIG. 7 is a block diagram of a server according to an embodiment of the present invention; and
FIG. 8 is a block diagram of a user terminal according to an embodiment of the present invention.

### DETAILED DESCRIPTION

A method for associating messages and a user terminal and a server thereof are provided according to embodiments of the present invention. The method, the user terminal and the server are used to associate standalone messages with session messages.

In an embodiment of the present invention, because standalone messages or session messages for each subject are assigned with association identities, IDs, association may be performed based on the association IDs when conversion is conducted between the standalone messages and the session messages for the same subject or when the session messages run simultaneously with the standalone messages. Accordingly, the user may interact messages in a more convenient manner and may learn the content of the current session in time during a message interaction process.

Based on the place where association is performed, the method for associating messages according to an embodiment of the present invention may be described according to the following two situations.

### I. Message association is performed at user terminals.

Specifically, the message association in this situation may further be categorized into two types.

### A. Direct association

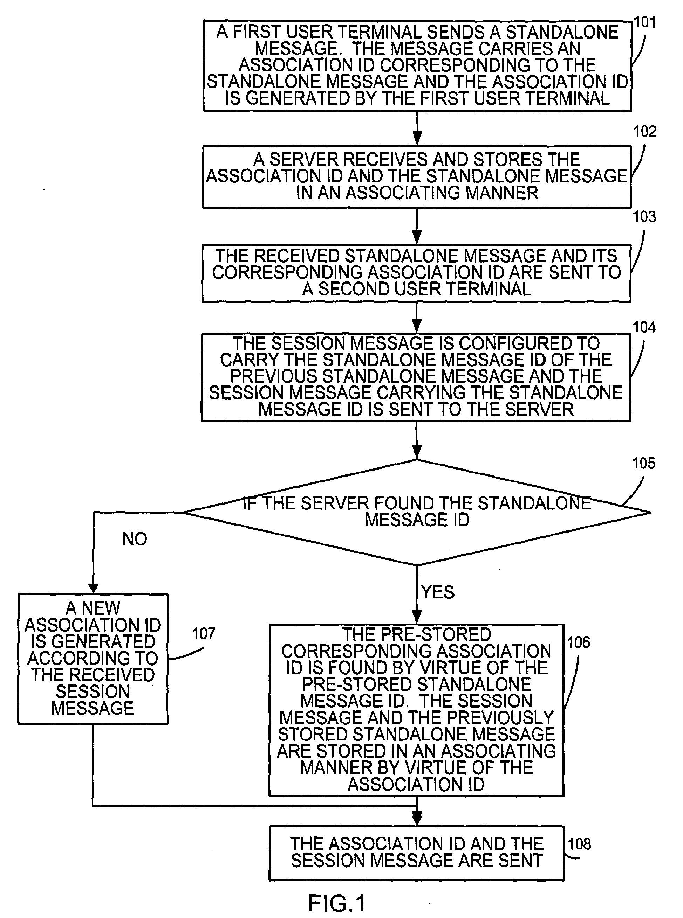

Referring to FIG. 1, a method for associating messages according to a first embodiment of the present invention is illustrated, where a standalone message is associated with a session message. Specifically, the method includes the followings.

Step 101: A first user terminal sends a standalone message. The message carries an association ID corresponding to the standalone message and the association ID is generated by the first user terminal.

Step 102: A server receives and stores the association ID and the standalone message in an associating manner.

Step 103: The received standalone message and its corresponding association ID are sent to a second user terminal.

Step 104: After the standalone message is interacted between the first user terminal and the second user terminal, and the first user terminal or the second user terminal feels it necessary to send a session message associating with the previous standalone message, then the session message is set to carry the standalone message ID of the previous standalone message and the session message carrying the standalone message ID is sent to the server.

The standalone message ID described above in this step is an ID which is assigned to the standalone message according to prior arts. Moreover, according to the prior arts, the standalone message ID and the standalone message are stored in an associating manner. Therefore, the details are omitted herein.

Step 105: After receiving the session message containing the standalone message ID, the server searches for an association ID corresponding to the standalone message ID. If the association ID is found, the method proceeds to step 106. If the association ID is not found, the method proceeds to step 107.

Step 106: The pre-stored corresponding association ID is found through the pre-stored standalone message ID. The session message and the previously stored standalone message are stored in an associating manner through the association ID. Then, the method proceeds to step 108.

Step 107: A new association ID is generated according to the received session message and the method proceeds to step 108.

Step 108: The association ID and the session message are sent to a peer user terminal.

If the session message is first sent by the first user terminal, the peer user terminal is regarded as the second user terminal. If the session message is first sent by the second user terminal, the peer user terminal is regarded as the first user terminal.

Because the message contents are associated with each other in the standalone message process and the session message process, a further step may be performed for storing the standalone message or the session message and the corresponding association ID in an associating manner when the standalone message or the session message may be received so that the dialog history can be viewed easily. If step 105 further includes a step for inviting another terminal to join the session, the invited terminal may view the history of the standalone message and the session message by sending a request to the server.

To facilitate the viewing of history by users, the above method further includes recording the sending time or the receiving time of a standalone message when the server receives the standalone message and saves the standalone message; and recording the starting time of a session message when receiving the session message. Then, the user terminal may view the history in time order of each message, therefore enhancing user satisfaction.

To save system resources, a trigger condition may be provided. If a provided trigger condition is met, the process of associating the standalone message or the session message with the above described association ID is ended. For instance, the trigger condition may be that a particular standalone message or a particular session message is not received during a predetermined time period.

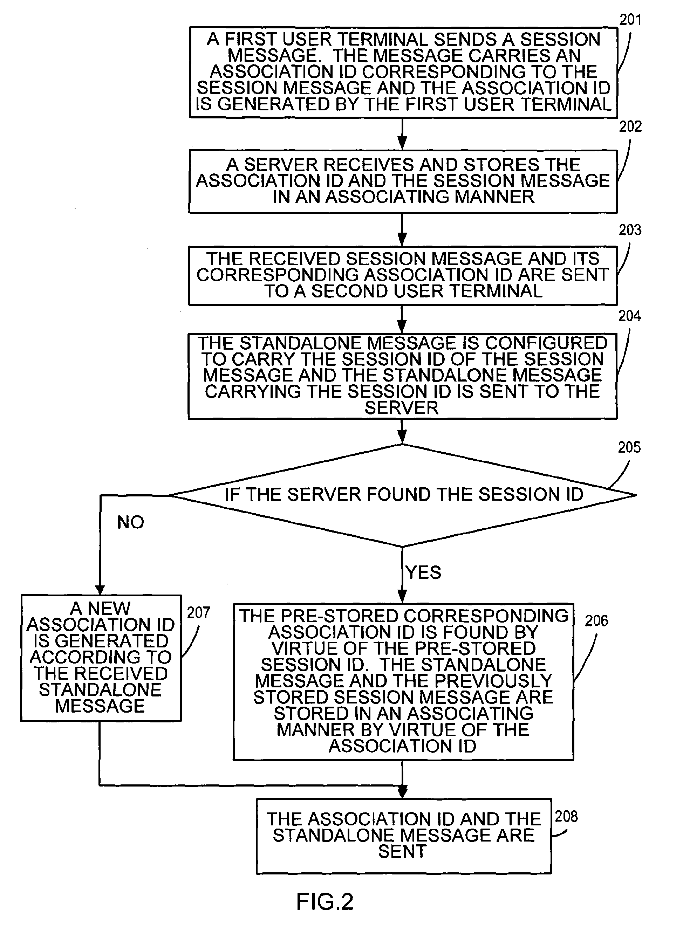

The above embodiment describes a process of associating a standalone message with a session message. A process of associating a session message with a standalone message is described below. Referring to FIG. 2, a method for associating messages according to a second embodiment of the present invention may include the followings.

Step 201: A first user terminal sends a session message. The message carries an association ID corresponding to the session message and the association ID is generated by the first user terminal.

Step 202: A server receives and stores the association ID and the session message in an associating manner.

Step 203: The received session message and its corresponding association ID are sent to a second user terminal.

Step 204: After the session message is interacted between the first user terminal and the second user terminal, and the first user terminal or the second user terminal feels it necessary to send a standalone message associating with the previous session message, then the standalone message is set to carry the session message ID of the previous session message and the standalone message carrying the session message ID is sent to the server.

The session message ID described above in this step is an ID which is assigned to the session message according to prior arts. Moreover, according to the prior arts, the session message ID and the session message are stored in an associating manner. Therefore, the details are omitted herein.

Step 205: After receiving the standalone message containing the session message ID, the server searches for the session message ID. If the session message ID is found, the method proceeds to step 206. If the session message ID is not found, the method proceeds to step 207.

Step 206: The pre-stored corresponding association ID is found through the pre-stored session message ID. The standalone message and the previously stored session message are stored in an associating manner through the association ID. The method proceeds to step 208.

Step 207: A new association ID is generated according to the received standalone message and the method proceeds to step 208.

Step 208: The association ID and the standalone message are sent to a peer user terminal.

If the standalone message is first sent by the first user terminal, the peer user terminal is regarded as the second user terminal. If the standalone message is first sent by the second user terminal, the peer user terminal is regarded as the first user terminal.

### B. Indirect association

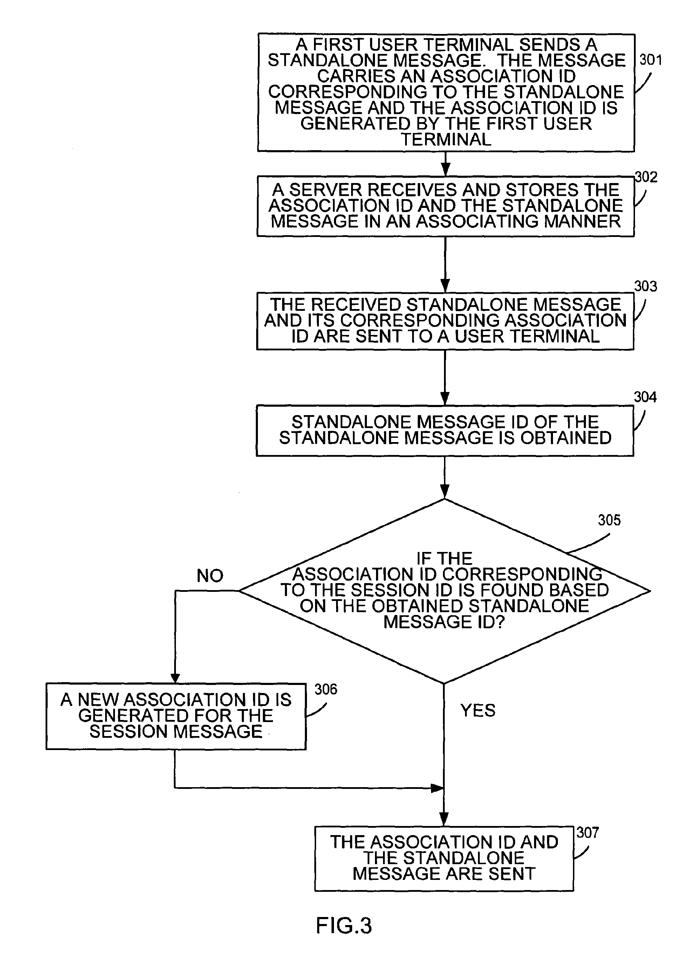

Referring to FIG. 3, a method for associating messages according to a third embodiment of the present invention is illustrated, where a standalone message is associated with a session message. Specifically, the method includes the followings.

Step 301: A first user terminal sends a standalone message. The message carries an association ID corresponding to the standalone message and the association ID is generated by the first user terminal.

Step 302: A server receives and stores the association ID and the standalone message in an associating manner.

Step 303: The received standalone message and its corresponding association ID are sent to a second user terminal.

Step 304: After the standalone message interaction is performed between the user terminals and a user terminal feels it necessary to send a session message associated with the previous standalone message to obtain the standalone message ID of the standalone message.

In this step, the standalone message ID may be obtained from the server or from the content pre-stored locally.

The standalone message ID described above in this step is an ID which is assigned to the standalone message according to prior arts. Therefore, the details are omitted herein.

Step 305: After the standalone message ID is obtained, the association ID corresponding to the standalone message ID is searched based on the obtained standalone message ID. If the association ID is found, the method proceeds to step 307. If the association ID is not found, the method proceeds to step 306.

In this step, the association ID corresponding to the standalone message ID can be searched in a record generated by a current user terminal, or may be searched in the server.

Step 306: A new association ID is generated for the session message and the method proceeds to step 307.

Step 307: The association ID and the session message are sent to a peer user terminal.

When the session message is being converted from the standalone message, the process is similar to that in the above embodiment. Therefore, the process is omitted herein.

In all of the above described embodiments, an association ID is generated by the first user terminal. It is to be understood that the association ID may also be generated by the server. In this case, the first user terminal simply sends a standalone message or a session message to a server, and the server then generates an association ID based on the received standalone message or the session message.

The following describes how a server performs message association.

### II. Message association is performed on a server.

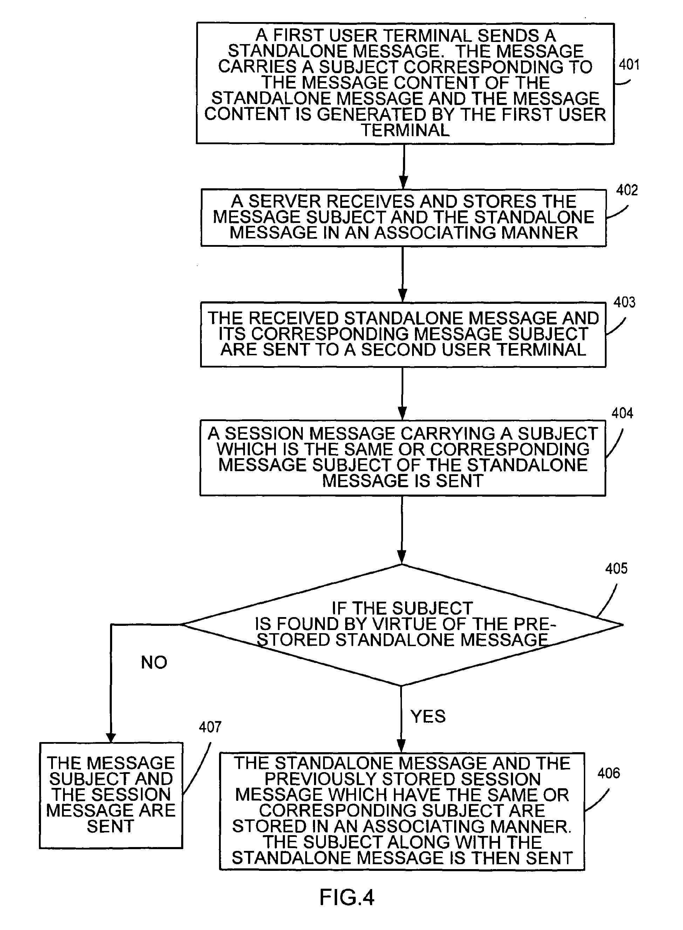

Referring to FIG. 4, a method for associating messages according to a fourth embodiment of the present invention is illustrated, where a standalone message is associated with a session message. In the below embodiment, by way of example, the message subject is regarded as the association ID. It is to be understood, information in other form may also serve as the association ID. Specifically, the embodiment is described below.

Step 401: A first user terminal sends a standalone message. The message carries a message subject corresponding to the sent message content of the standalone message and the message subject is generated by the first user terminal.

Step 402: A server receives and stores the message subject and the standalone message in an associating manner.

Step 403: The received standalone message and its corresponding message subject are sent to a second user terminal.

Step 404: After the standalone message interaction is performed between the user terminals and a user terminal feels it necessary to send a session message associated with the previous standalone message, a session message carrying a message subject which is the same or corresponding message subject of the standalone message is sent.

Step 405: After receiving the session message containing the message subject, the server searches for the message subject through the pre-stored standalone message. If the message subject is found, the method proceeds to step 406. If the message subject is not found, the method proceeds to step 407.

Step 406: The session message and the previously stored standalone message which have the same subject are stored in an associating manner. The stored corresponding message subject along with the session message is sent to a peer user terminal.

Step 407: The received message subject and the session message are sent to the peer user terminal.

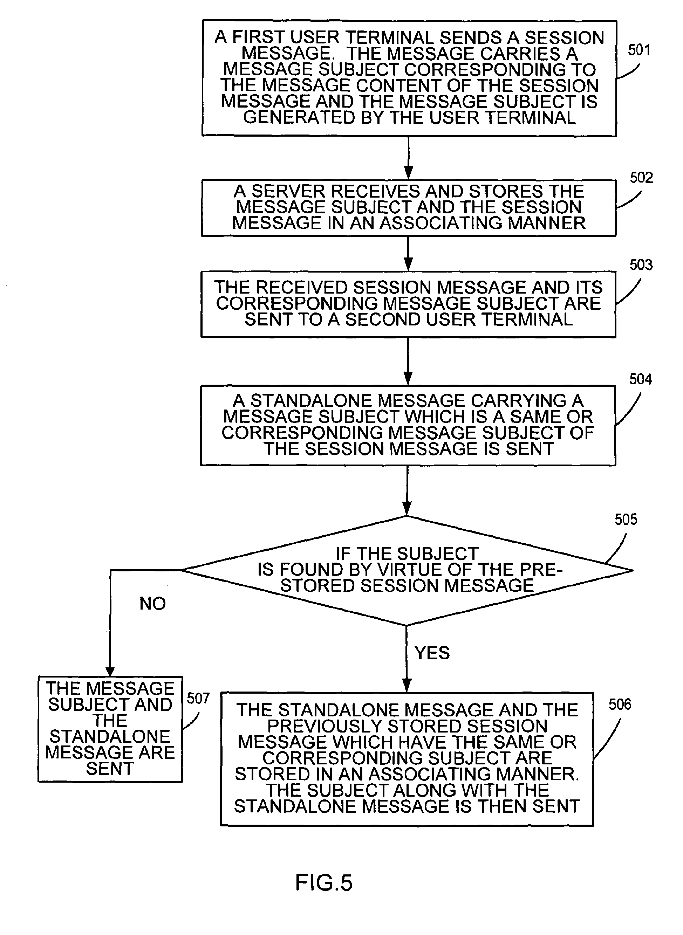

Referring to FIG. 5, a method for associating messages according to a fifth embodiment of the present invention is illustrated, where a session message is associated to a standalone message. In the below embodiment, by way of example, the message subject serves as the association ID. It is to be understood, information in other form may also serve as the association ID. Specifically, the embodiment is described below.

Step 501: A first user terminal sends a session message. The message carries a message subject corresponding to the sent message content of the session message and the message subject is generated by the first user terminal.

Step 502: A server receives and stores the message subject and the session message in an associating manner.

Step 503: The received session message and its corresponding message subject are sent to a second user terminal.

Step 504: After the session message interaction is performed between the user terminals and a user terminal feels it necessary to send a standalone message associated with the session message, a standalone message carrying a message subject which is the same as that of the session message or corresponds to the message subject of the session message is sent.

Step 505: After receiving the standalone message containing the message subject, the server searches for the message subject through the pre-stored session message. If the message subject is found, the method proceeds to step 506. If the message subject is not found, the method proceeds to step 507.

Step 506: The standalone message and the previously stored session message which have a corresponding message subject are stored in an associating manner. The stored corresponding message subject along with the standalone message is sent to a peer user terminal.

Step 507: The received message subject and the standalone message are sent to the peer user terminal.

In all of the above described embodiments, an association ID is generated by the first user terminal. It is to be understood that the association ID may also be generated by the server. In this case, the first user terminal simply sends a standalone message or a session message to a server, and the server then generates an association ID based on the received standalone message or the session message.

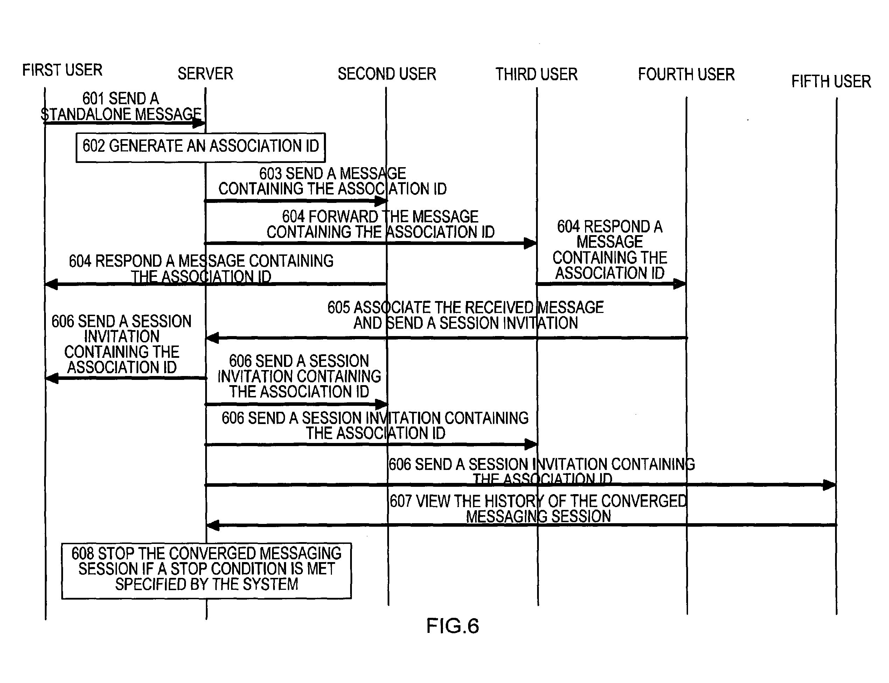

To describe the implementation of the embodiments of the present invention more clearly, a specific example with respect to Converged IP Messaging service (CPM) is given, as illustrated in FIG. 6.

Assume there is a plurality of CPM users to conduct a converged messaging session. Initially, each user interacts in a standalone message. For easy understanding, assume that all the users use a same server and the server stores the interaction information in all the converged messaging session.

Step 601: A first user sends a first standalone message to a second user and a third user.

Step 602: The server first generates a corresponding association ID for the message.

Step 603: The server sends this message to the second user and the third user.

Step 604: The second user receives this message and responds a message to the first user. At this moment, the response message already contains the association ID of the converged messaging session. The third user forwards this message to a fourth user. This forwarding message also contains the association ID of the converged messaging session.

Step 605: The fourth user feels it necessary to initiate a session to discuss the topic. Then, the user sets up a session and associates this session with the standalone message forwarded from the third user. The session participants may include the first user, the second user, the third user, the fourth user and a newly added fifth user. The fourth user sends a session invitation to the server. The session invitation contains the association ID of the converged messaging session.

Step 606: The server sends an invitation to the first user, the second user, the third user, the fourth user and a newly added fifth user.

Step 607: Because the fifth user just joins the converged messaging session, the user needs to know about the background for initiating the session. The server stores all the information of the converged messaging session. The fifth user may view previous interaction information on the server and learn the session history.

Step 608: After the session is over, the converged messaging session again enters a status where interaction is conducted by standalone messages. When there is no information interaction during the converged messaging session in a time period prescribed by the system, the system may automatically set the status of the converged messaging session to "stop".

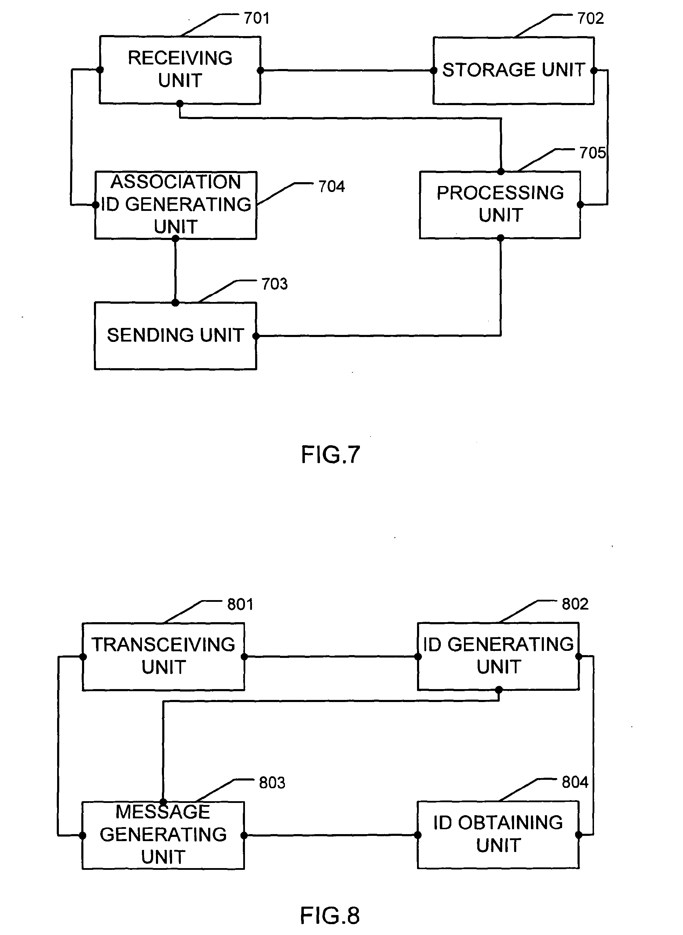

Referring to FIG. 7, a server according to an embodiment of the present invention may include:
a receiving unit 701, configured to receive a standalone message or a session message containing an association ID;
a storage unit 702, configured to store, in an associating manner, the standalone message or the session message received from the receiving unit 701 and the corresponding association ID;
a sending unit 703, configured to send the standalone message or the session message received from the receiving unit 701 and the corresponding association ID to the user terminal; and
a processing unit 705, configured to obtain the corresponding association ID according to the standalone message or the session message received from the receiving unit 701, and configured to store in an associating manner the association ID and the standalone message or session message received from the receiving unit 701 via the storage unit 702.

Preferably, the server may also include an association ID generating unit 704, configured to generate an association ID corresponding to the standalone message or the session message.

Referring to FIG. 8, a user terminal according to an embodiment of the present invention may include:
a transceiving unit 801, configured to receive or send a first message or a second message;
an ID generating unit 802, configured to generate an association ID corresponding to the first message and send the association ID to a message generating unit; and
a message generating unit 803, configured to generate a first message or a second message according to the association ID;

Preferably, the user terminal may further include an ID obtaining unit 804 configured to obtain an association ID of a first message when a second message is being sent and send the association ID to the message generating unit 803.

The first message is a standalone message or session message. When the first message is a standalone message, the second message is a session message. When the first message is a session message, the second message is a standalone message.

It is appreciated by those skilled in the art that the entire or partial steps in the above embodiments can be implemented with hardware when instructed by programs. Such programs may be stored in a computer or in a readable storage media. The storage media may include ROM, magnetic disc, or optical disc.

Overall, according to the present invention, because standalone messages or session messages for each subject are assigned with association IDs, association may be performed based on the association ID when conversion is conducted between the standalone messages and the session messages for the same subject or when the session messages are running simultaneously with the standalone messages. Accordingly, a user may interact messages in a more convenient manner and may learn the content of the current session in time during a message interaction process.

Moreover, the association of the session message and the standalone message is conducted at a user terminal so that a user may have more freedom to decide whether to associate message, thus enriching the user operability and enhancing user satisfaction.

Further, the server is configured with subject association. The server may decide whether to associate the standalone message with the session message. Hence, when a session carries a subject, the server may automatically associate the message and thus enriching the application of message association.

The above description is directed to a method and apparatus for converged message according to the present invention. It is appreciated by a person with ordinary skill in the art that modifications may be made to the specific implementation of the embodiments and the application fields in accordance with the spirit and principle of the embodiments of the present invention. Therefore, the Specification shall not be construed as a limitation to the scope of the present invention.

## Claims

1. A method for associating messages, **characterized by** comprising:
receiving, by a server, a first message sent by a first user terminal, wherein the first message comprises an association identity, ID, corresponding to the first message and the association ID is generated by the first user terminal;
sending, by the server, the first message comprising the association ID to a second user terminal;
receiving, by the server, a second message comprising the association ID sent by the first user terminal or the second user terminal; and
storing, by the server, the second message and the association ID in an associating manner.

2. The method of claim 1, wherein the method further comprises:
sending, by the server, the association ID and the second message to a peer user terminal, wherein if the second message is sent by the first user terminal, the peer user terminal is the second user terminal; if the second message is sent by the second user terminal, the peer user terminal is the first user terminal.

3. The method of claim 1 or 2, wherein the first message is a standalone message and the second message is a session message; or
the first message is a session message and the second message is a standalone message.

4. The method of claim 3, wherein before the server receives the second message sent by the first user terminal or the second user terminal, the method further comprises:
obtaining, by the first user terminal or the second user terminal, the association ID locally or from the server;
carrying, by the first user terminal or the second user terminal, the association ID in the second message;
sending, by the first user terminal or the second user terminal, the second message to the server.

5. The method of claim 1, wherein the association ID is message subject information, or information of a field fixed in a message ID, or information of a specific field in the message header.

6. A method for associating messages, **characterized by** comprising:
receiving, by a server, a first message sent by a first user terminal;
sending, by the server, the first message comprising an association identity, ID, to a second user terminal and storing the first message and the association ID in an associating manner;
receiving, by the server, a second message sent by the first user terminal or the second user terminal, wherein the second message comprises information indicating the association between the second message and the first message;
querying, by the server, the stored association IDs for an association ID corresponding to the information indicating the association between the second message and the first message; storing, by the server, the second message and the queried association ID in an associating manner if the association ID is found.

7. The method of claim 6, wherein if the corresponding association ID is not found by the server, the method comprises:
generating, by the server, an association ID according to the second message;
sending the generated association ID and the second message to a peer user terminal;
wherein if the second message is sent by the first user terminal, the peer user terminal is regarded as the second user terminal; if the second message is sent by the second user terminal, the peer user terminal is regarded as the first user terminal.

8. The method of claim 6 or 7, wherein the first message is a standalone message and the second message is a session message; or
the first message is a session message and the second message is a standalone message.

9. The method of claim 8, wherein before the server sends the first message comprising the association ID to the second user terminal, the method further comprises:
receiving, by the server, the first message comprising the association ID sent by the first user terminal.

10. The method of claim 8, wherein before the server sends the first message comprising the association ID to the second user terminal, the method further comprises:
receiving, by the server, the first message sent by the first user terminal; and
generating, by the server, an association ID according to the first message.

11. A user terminal, **characterized by** comprising:
a transceiving unit, configured to receive or send a first message or a second message;
an identity, ID, generating unit, configured to generate an association ID corresponding to the first message and send the association ID to a message generating unit; and
the message generating unit, configured to generate the first message or the second message according to the association ID.

12. The user terminal of claim 11, wherein the user terminal further comprises:
an ID obtaining unit, configured to obtain an association ID of the first message when the second message is being sent and send the association ID to the message generating unit.

13. The user terminal of claim 11 or 12, wherein the first message is a standalone message or a session message;
the second message is a session message when the first message is a standalone message; or the second message is a standalone message when the first message is a session message.

14. A server, **characterized by** comprising:
a receiving unit, configured to receive a standalone message or a session message containing an association identity, ID;
a storage unit, configured to store, in an associating manner, the standalone message or the session message received from the receiving unit and the corresponding association ID;
a sending unit, configured to send the standalone message or the session message received from the receiving unit and the corresponding association ID to a user terminal; and
a processing unit, configured to obtain the corresponding association ID according to the standalone message or the session message received from the receiving unit, and store, in an associating manner, the standalone message or session message received from the receiving unit and the corresponding association ID via the storage unit.

15. The server of claim 14, wherein the server further comprises:
an association ID generating unit, configured to generate an association ID corresponding to the standalone message or the session message.
